# EUROPEAN PATENT SPECIFICATION

(11) **EP 0 619 972 B1**
(45) Date of publication and mention of the grant of the patent: **15.11.1995**
(21) Application number: 94200967.1
(22) Date of filing: 11.04.1994
(51) Int. Cl.: A47J 31/50, A47J 41/02

(54) **Thermos bottle comprising a liquid feeding structure**
Isolierflasche mit einer Vorrichtung zum Zuführen von Flüssigkeit
Thermos comprenant un système de remplissage de liquide

(30) Priority: 13.04.1993 JP 24640/93 U
(43) Date of publication of application: 19.10.1994
(73) Proprietor: VERHEIJEN B.V., NL-1704 RD Heerhugowaard (NL)
(72) Inventor: Kobayashi, Jiro c/o Kobayashi Corp. room 306, HLM, KOBE Hyogo (JP); Takagawa, Nobuyuki c/o Peacock Co., Ltd., Osaka (JP)
(74) Representative: de Bruijn, Leendert C.

(56) References cited:
- DE-C- 3 220 268
- US-A- 1 549 840
- US-A- 4 386 556
- US-A- 4 924 922
- US-A- 5 038 959

## Description

The invention relates to a thermos bottle comprising an inner insulating bottle held in a main body case, said thermos bottle comprising a feeding port through which liquid may enter or leave the inner bottle, a feeding port plug, being installed in said feeding port, said feeding port plug comprising a liquid communication chamber extending between a liquid receiving input port and the interior of the bottle, Such a thermos bottle is known from document US-A-4 386 556.

Thermos bottles of the above-identified type are known in various different embodiments and are used for storing hot liquids, such as coffee, tea, or the like, or for storing cooled liquids, such as ice water, ice tea, etc.

In a variety of thermos bottles the feeding port for feeding liquid is closed by a stopper plug which has to be removed for feeding liquid through the feeding port into the inner bottle. In other embodiments the stopper plug is provided with a feeding passage and in that case the stopper plug does not have to be removed to feed liquid into the inner bottle because, for that purpose, said feeding passage can be used.

Generally known are thermos bottles comprising a lid with a built in pump mechanism for injecting air into the bottle and comprising a feeding port stopper plug containing a passage connected to a riser pipe extending from said passage to near the bottom of the bottle. A problem with such thermos bottles is, that the plug with the thereto connected riser pipe has to be removed each time the thermos bottle is refilled with fresh extracted liquid.

A first object of the invention is now to provide a thermos bottle embodied such that it is not necessary to remove the feeding port stopper plug with the thereto attached further components to be able to fill the bottle with liquid.

If the thermos bottle is used in cooperation with an apparatus for preparing hot drinks by extraction, such as coffee or tea, the bottle is positioned underneath the filter unit of said apparatus to directly receive the extract liquid dripping out of said filter unit. However, since the concentration of the extract differs between the beginning and the end of the extraction process the liquid sequentially collected in the inner bottle will show a concentration gradient, the liquid with stronger concentration being present near the bottom of the bottle and the concentration decreasing in upwards direction. Hence, it requires stirring or the like to eliminate this concentration gradient.

It is now a further object of the invention to present a liquid feeding structure for a thermos bottle capable of providing inside the bottle an extracted liquid with a uniform concentration without requiring separate stirring or the like.

In agreement with said objects the invention now provides a thermos bottle of the type mentioned in the heading paragraph, which according to the invention is characterized in that a liquid feeding pipe is connected to the other side of the liquid communication chamber, which liquid feeding pipe extends inside the inner bottle, the length of said feeding pipe being selected such that the free end of said pipe reaches almost to near the bottom of the inner bottle. Other preferred features are disclosed in the dependent claims.

The invention will now be explained in more detail with reference to the attached drawings.

Figure 1 illustrates a sectional view through a thermos bottle which is embodied in agreement with the invention.

Figure 2 illustrates in more detail the feeding port stopper plug with the thereto attached components.

Figure 3 illustrates an other thermos bottle comprising a feeding port stopper plug according to the invention.

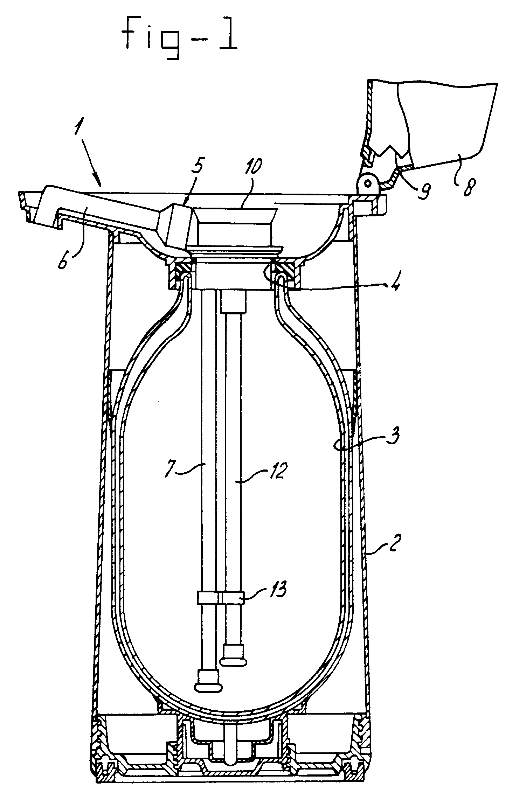

Figure 1 illustrates a sectional view through a first embodiment of a thermos bottle according to the invention which in general is indicated by reference number 1. The illustrated embodiment forms only an example of a thermos bottle, which possesses a liquid feeding structure in agreement with the invention for feeding an extracted liquid, such as coffee or tea, into the bottle.

The thermos bottle or air-pot 1 as shown in the drawing comprises a main body case 2 supporting an inner bottle 3. The way in which the inner bottle is supported within the main body case is considered as known to the expert and will not be described any further although details are shown in figure 1. The main body case 2 has a main body feeding port 4 attached to the opening of the inner bottle 3 and cooperating therewith. A stopper plug 5 is detachably fitted to said main body feeding port 4.

The stopper plug 5 is furnished with a liquid discharge passage, connected on the side within the inner bottle 3 to a lift pipe or riser pipe 7, whereas the other end thereof, outside the bottle, is connected to a discharge spout 6.

The stopper plug 5 is provided with a further passage extending from the stopper plug feeding port 10 through a communication chamber 11 and through a feeding pipe 12. The feeding pipe 12 communicates with the inner plug feeding port 10 and is formed vertically beneath the inner plug feeding port 10.

The length of the feeding pipe 12 is selected long enough so that its lower end may reach almost the bottom of the inner bottle 3, so that the liquid poured in through the feeding pipe 12 may push the already present liquid upwards to cause a flow in the total mass of collected liquid.

To improve the constructional stability the feeding pipe 12 and the lift pipe 7 are bundled and fixed together by a bundling clamp 13, shown in figure 1, and made of a synthetic resin or metal.

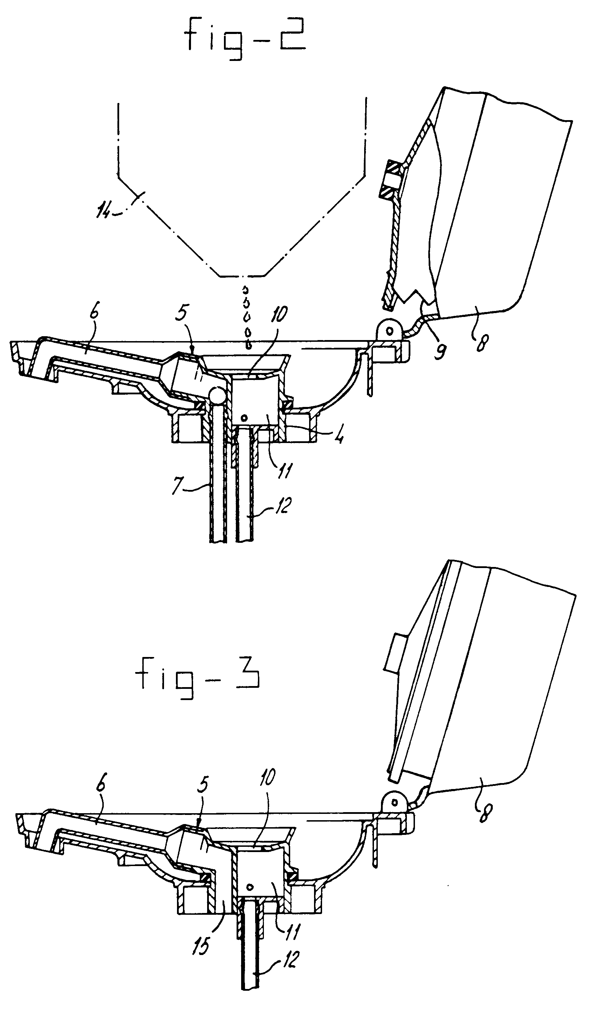

Air can be injected into the inner bottle 3 by means of a bellows pump 9 which is built into a lid body 8 as shown in detail in figure 2. The air will flow through the stopper plug feeding port 10 which also functions for feeding the liquid into the inner bottle 3 without the necessity to remove the stopper plug 5.

As shown in figure 2, when the thermos bottle 1 is placed underneath the filter unit 14 of an apparatus for preparing beverages by extracting, very schematically indicated in figure 2 by dash and dot lines, the extract liquid dripping from the filter unit 14 in the inner plug feeding port 10 will run through the feeding pipe 12 and will enter the inner bottle 3 near the bottom thereof. The inflowing extracted liquid will push the already collected liquid in the inner bottle 3 and will cause a flow in the whole mass of collected liquid. By this flow the concentration of the collected extract, which in fact differs between the beginning and the end of the extraction process, is made uniform inside the bottle 3. The rather strong extract received at the beginning of the extraction process will move upwards while the thinner extract dropping lateron will move sequentially from below to upwards, so that the concentration of the extract collected in the inner bottle 3 is made uniform near the end of the extraction process.

Accordingly, stirring or other measures to make the concentration uniform are not needed. Labour is saved and loss of flavour or escape of taste of the extract due to the stirring process may be prevented.

The invention is not limited to thermos bottles with an air injection system of the type shown in the figures, but may also be applied to thermos bottles destined to pour out liquid by tilting. Details of such an embodiment are illustrated in figure 3.

The basic difference between the embodiments illustrated in figures 2 and 3 is the fact that the embodiment illustrated in figure 3 does not comprise a riser pipe or lift pipe 7. If the thermos bottle is tilted the liquid therein will flow through the passage 15 and the discharge spout 6 out of the bottle. The lid 8 in this embodiment does not comprise a bellows pump. All other details shown in figure 3 are identical to the corresponding ones in figure 2 and do not need any further detailed description.

## Claims

1. Thermos bottle (1) comprising an inner insulating bottle (3) held in a main body case (2), said thermos bottle comprising a feeding port (4) through which liquid may enter or leave the inner bottle, a feeding port plug (5), being installed in said feeding port (4), said feeding port plug (5) comprising a liquid communication chamber (11) extending between a liquid receiving input port (10) and the interior of the bottle, characterized in that a liquid feeding pipe (12) is connected to the other side of the liquid communication chamber (11), which liquid feeding pipe extends inside the inner bottle, the length of said feeding pipe being selected such that the free end of said pipe reaches almost to near the bottom of the inner bottle.

2. Thermos bottle according to claim 1, characterized in that the feeding port stopper plug (5) comprises a further passage (15), apart from the communication chamber, destined to pour out liquid from the inner bottle.

3. Thermos bottle according to claim 1, characterized in that the bottle comprises a lid (18) with a built in pump mechanism (9), known per se, to inject air through the communication chamber into the inner bottle, and that the feeding port stopper plug contains a further passage connected on the one side to a rising pipe (7) extending from said further passage to near the bottom of the inner bottle and connected on the other side to a delivery spout (6).

4. Thermos bottle according to claim 3, characterized in that the liquid feeding pipe (12) and the rising pipe (7) are, near the lower ends thereof, mutually connected through a bundling clamp (13).

## Patentansprüche

1. Thermosflasche (1) mit einer in einem Hauptkörpergehäuse (2) gehaltenen inneren Isolierflasche (3), wobei die Thermosflasche eine Zuführungsöffnung (4) enthält, durch welche Flüssigkeit in die innere Flasche eintreten oder sie verlassen kann, mit einem Zuführungsöffnungsstopfen (5), der in der Zuführungsöffnung (4) angebracht ist, wobei der Zuführungsöffnungsstopfen (5) eine sich zwischen einer Flüssigkeitsaufnahmeeingangsöffnung (10) und dem Inneren der Flasche erstreckende Flüssigkeitsverbindungskammer (11) enthält, dadurch gekennzeichnet, daß eine Flüssigkeitszuführungsröhre (12) an die andere Seite der Flüssikeitsverbindungskammer (11) angeschlossen ist, welche Flüssigkeitszuführungsröhre sich in die innere Flasche erstreckt, wobei die Länge der Flüssigkeitszuführungsröhre so gewählt ist, daß das freie Ende der Röhre fast bis nahe dem Boden der inneren Flasche reicht.

2. Thermosflasche nach Anspruch 1, dadurch gekennzeichnet, daß der Zuführungsöffnungsverschlußstopfen (5) außer der Verbindungskammer eine weitere Passage (15) enthält, die zum Ausgießen von Flüssigkeit aus der inneren Flasche vorgesehen ist.

3. Thermosflasche nach Anspruch 1, dadurch gekennzeichnet, daß die Flasche einen Deckel (18) mit einem eingebauten Pumpmechanismus (9) enthält, der per se bekannt ist, um durch die Verbindungskammer Luft in die innere Flasche zu injizieren, und daß der Zuführungsöffnungsverschlußstopfen eine weitere Passage enthält, die an der einen Seite mit einer sich von der weiteren Passage zu nahe dem Boden der inneren Flasche erstreckende aufsteigende Röhre (7) verbunden ist und an der anderen Seite mit einer Ausgußschnauze (6) verbunden ist.

4. Thermosflasche nach Anspruch 3, dadurch gekennzeichnet, daß die Flüssigkeitszuführungsröhre (12) und die aufsteigende Röhre (7) nahe deren Enden miteinander durch eine Bündelungsklammer (13) verbunden sind.

## Revendications

1. Bouteille thermos (1) comprenant une bouteille isolante intérieure (3) maintenue dans une enceinte de corps principale (2), ladite bouteille thermos comprenant un orifice d'alimentation (4) par lequel du liquide peut entrer dans la bouteille intérieure ou quitter celle-ci, un bouchon d'orifice d'alimentation (5) étant installé dans ledit orifice d'alimentation (4), ledit bouchon d'orifice d'alimentation (5) comportant une chambre de communication de liquide (11) s'étendant entre un orifice d'entrée de réception de liquide (10) et l'intérieur de la bouteille, caractérisée en ce qu'un tuyau d'alimentation en liquide (12) est connecté à l'autre côté de la chambre de communication de liquide (11), ce tuyau d'alimentation en liquide s'étendant à l'intérieur de la bouteille intérieure, la longueur dudit tuyau d'alimentation étant choisie de telle sorte que l'extrémité libre dudit tuyau atteigne presque le fond de la bouteille intérieure.

2. Bouteille thermos selon la revendication 1, caractérisée en ce que le bouchon d'orifice d'alimentation (5) comporte un autre passage (15), distinct de la chambre de communication, destiné à verser du liquide depuis la bouteille intérieure.

3. Bouteille thermos selon la revendication 1, caractérisée en ce que la bouteille comporte un couvercle (18) avec un mécanisme de pompe incorporé (9), connu en soi, afin d'injecter de l'air, à travers la chambre de communication, dans la bouteille intérieure, et en ce que le bouchon d'orifice d'alimentation contient un autre passage connecté d'un côté à un tuyau remontant (7) s'étendant à partir dudit autre passage jusqu'au voisinage du fond de la bouteille intérieure, et connecté de l'autre côté à une goulotte de distribution (6).

4. Bouteille thermos selon la revendication 3, caractérisée en ce que le tuyau d'alimentation en liquide (12) et le tuyau remontant (7) sont, au voisinage des extrémités inférieures de ceux-ci, mutuellement connectés par l'intermédiaire d'une attache de liaison en faisceau (13).
